# EUROPÄISCHE PATENTSCHRIFT

(11) **EP 0 621 305 B1**
(45) Veröffentlichungstag und Bekanntmachung des Hinweises auf die Patenterteilung: **29.05.1996**
(21) Anmeldenummer: 94104859.7
(22) Anmeldetag: 28.03.1994
(51) Int. Cl.: C08K 3/26, C08G 63/80, C08L 67/02

(54) **Verfahren zur Herstellung von flammgeschützten thermoplastischen Formmassen auf der Basis von Polyestern.**
Process for preparation of flame-resistant thermoplastic moulding compositions based on polyesters.
Procédé pour préparation de masses de moulage ignifugées à base de polyesters.

(30) Priorität: 20.04.1993 DE 4312751
(43) Veröffentlichungstag der Anmeldung: 26.10.1994
(73) Patentinhaber: BASF Aktiengesellschaft, D-67063 Ludwigshafen (DE)
(72) Erfinder: Gareiss, Brigitte, Dr., D-67071 Ludwigshafen (DE); Baierweck, Petra, Dr., D-67459 Boehl-Iggelheim (DE); Plachetta, Christoph, Dr., D-67117 Limburgerhof (DE); Ulmerich, Karlheinz, D-67245 Lambsheim (DE)

(56) Entgegenhaltungen:
- EP-A- 0 186 456
- EP-A- 0 207 750
- EP-A- 0 543 262

## Beschreibung

Die Erfindung betrifft ein verbessertes Verfahren zur Herstellung von flammgeschützten thermoplastischen Formmassen.

Thermoplastische Polyester werden in vielen unterschiedlichen Bereichen verwendet, z.B. im Automobilbereich, zur Herstellung von Gehäusen für Elektrogeräte oder im Bausektor.

Für viele Anwendungen ist es notwendig, daß die thermoplastischen Polyesterformmassen flammfest ausgerüstet sind.

Halogenhaltige Flammschutzmittel sind aus toxikologischen Gründen bei der Herstellung und Verarbeitung bedenklich. Im Brandfall setzen derartige Flammschutzmittel korrosive Halogenwasserstoffe frei.

Übliche Flammschutzmittel, die die helle Eigenfarbe der Formmassen nicht beeinträchtigen, wie Al(OH)₃ oder Mg(OH)₂ sind für die Verwendung in thermoplastischen Polyesterformmassen nicht geeignet. Al(OH)₃ ist bei den für die Verarbeitung von Polyestern benötigten Temperaturen thermisch instabil, so daß bereits während des Einmischens Wasserabspaltung erfolgt. Bei der Verwendung von Mg(OH)₂ spalten sich, aufgrund der Basizität von Mg(OH)₂, während der Verarbeitung die Polyesterbindungen, wodurch die Viskosität drastisch reduziert wird.

Die EP-A 207 750 beschreibt die Verwendung von Magnesiumcarbonaten als Füllstoffe und Flammschutzmittel in Kunststoffen. Hierbei ist die flammhemmende Wirkung durch CO₂-Abspaltung jedoch nicht zufriedenstellend.

Aufgrund ihrer Basizität sind die in der japanischen Schrift 53104-650 beschriebenen Mischungen aus basischem Magnesium-Carbonat und Hydrodulcit sowie die in der japanischen Schrift 63210-165 beschriebenen basischen Magnesium-Carbonate als Flammschutzmittel für thermoplastische Polyester nicht geeignet, da sie - wie Mg(OH)₂ - zur Spaltung der Polyesterbindungen führen.

Entsprechend wird in der jüngeren EP-Anmeldung 92 119 257 vorgeschlagen, Mischungen aus Metallcarbonaten von Metallen der 2. Hauptgruppe als Flammschutzmittel für Polyester einzusetzen.

Die für einen ausreichenden Flammschutz erforderlichen hohen Füllstoffmengen führen bei der Einarbeitung mittels üblichen Konfektioniermethoden zu großen Problemen. Insbesondere schäumt die Schmelze durch den hohen Lufteintrag bei der Einarbeitung auf, sc daß ein Granulat mit niedriger Schüttdichte entsteht, d.h. in Säcken gleichen Volumens kann gewichtsmäßig weniger Granulat abgefüllt werden.

Aufgabe der vorliegenden Erfindung war es daher, ein Verfahren zur Herstellung von flammgeschützten thermoplastischen Polyesterformmassen zur Verfügung zu stellen, welches Polyester mit guten Flammschutzeigenschaften und mechanischen Eigenschaften insbesondere einer guten Schlagzähigkeit liefert. Zusätzlich soll bei der Einarbeitung der hohen Füllstoffmengen ein Aufschäumen des Granulatstranges vermieden werden, so daß ein kompaktes Granulat mit einer hohen Schüttdichte erzielt werden kann.

Diese Aufgabe wird durch ein Verfahren zur Herstellung von flammgeschützten thermoplastischen Formmassen gelöst, durch Einmischen von
A) 20 bis 70 Gew.-% Mischungen aus Carbonaten von Metallen der 2. Hauptgruppe des Periodensystems
   und
B) 0 bis 70 Gew.-% weiterer Zusatzstoffe und Verarbeitungshilfsmittel
   in eine Schmelze von
C) 10 bis 80 Gew.-% eines Polyester-Präpolymeren mit einer Viskositätszahl von 40 bis 100 ml/g
   und anschließende Nachkondensation in fester Phase.

Bevorzugte Ausführungsformen sind den Unteransprüchen zu entnehmen.

Als Komponente A) enthalten die Formmassen 20 bis 70, bevorzugt 30 bis 60 und Insbesondere 40 bis 55 Gew.-% Mischungen aus Metallcarbonaten vcn Metallen der 2. Hauptgrurppe des Periodensystems.

Als besonders geeignet haben sich Mischungen aus
a) einem Magnesium-Calcium-Carbonat der allgemeinen Formel MgₓCa_{y}(CO₃)_{x+y} · m H₂O,
   wobei x und y Zahlen von 1 bis 5 bedeuten
   und x/y ≥ 1 gilt
   und m ≥ 0 und
a₂) einem basischen Magnesium-Carbonat der allgemeinen Formel Mgₙ(CO₃)ᵥ(OH)₂ₙ₋₂ᵥ · w H₂O
   wobei n eine Zahl von 1 bis 6 bedeutet,
   v eine Zahl größer als 0 und kleiner als 6
   und n/v > 1 gilt
   und w ≥ 0
erwiesen, wobei das Mengenverhältnis von a₁):a₂) im Bereich von 1:1 bis 3:1 liegt.

Die Magnesium-Calcium-Carbonate a₁) können sowohl wasserhaltig als auch wasserfrei sein. Bevorzugt sind die natürlich vorkommenden Mineralien wie Dolomit und Huntit.

Besonders bevorzugt ist eine wasserfreie Form, in der x = 3 und y = 1 gilt, Mg₃Ca(CO₃)₄ (Huntit).

Die basischen Magnesiumcarbonate a2) können ebenfalls sowohl in wasserhaltiger als auch wasserfreier Form eingesetzt werden. Auch hier sind die natürlich vorkommenden Mineralien wie Hydromagnesit, eine wasserhaltige Verbindung mit n = 5, v = 4 und w = 4, Mg₅(CO₃)₄(OH)₂ · 4 H₂O bevorzugt.

Besonders bevorzugt liegt das Verhältnis von a₁):a₂) im Bereich von 1:1 bis 2:1.

Als Komponente B) können die thermoplastischen Formmassen weiterer Zusatzstoffe und Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Kautschuke (Zähmodifier), Keimbildungsmittel, Weichmacher usw. enthalten, deren Anteil in der Regel nicht mehr als 70 Gew.-% bevorzugt nicht mehr als 40 Gew.-% beträgt.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarineblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Asbest, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.-%, bevorzugt bis 35 Gew.-% und insbesondere bis zu 25 Gew.-%.

Als Keimbildungsmittel können Natriumphenylphosphinat, Aluminiumoxid, Siliziumdioxid, Nylon 22 sowie bevorzugt Talkum eingesetzt werden.

Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-Stearat) oder Esterderivate (z.B. Stearylstearat oder Pentaerythrittetrastearat) sowie Amidderivate (z.B. Ethylen-bis-stearylamid).

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Die Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorethylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Zur besseren Verträglichkeit mit dem thermoplastischen Polyester sind Minerale und Füllstoffe gegebenenfalls mit einem Haftvermittler ausgerüstet. Bevorzugt sind Glycidyl-, Vinyl- und Aminoalkyltrialkoxysilane.

Weiterhin können die thermoplastischen Formmassen 0 bis 60, vorzugsweise 0 bis 40 Gew.-% eines schlagzäh modifizierenden Polymeren (im folgenden auch als kautschukelastisches Polymerisat oder Elastomer bezeichnet) enthalten.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR)=C(COOR³)R⁴ (I)

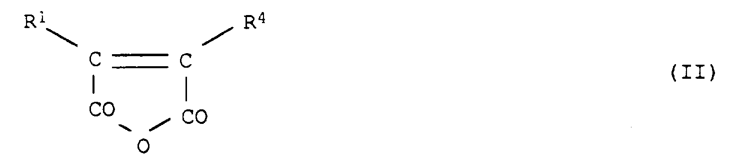

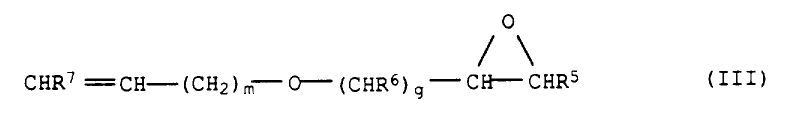

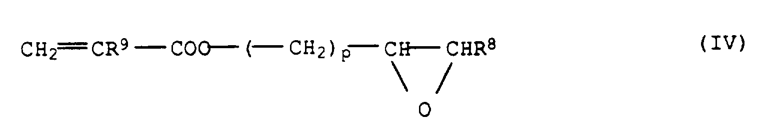

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew. -% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
- 50 bis 98,: insbesondere 55 bis 95 Gew. -% Ethylen,
- 0,1 bis 40,: insbesondere 0,3 bis 20 Gew.-% Glycidylacrylat und/oder Glycidylmethacrylat, (Meth)acrylsäure und/oder Maleinsäureanhydrid, und
- 1 bis 45,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 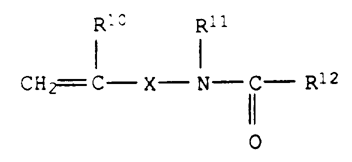 eingeführt werden können, wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 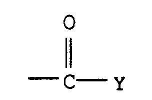
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Weitere bevorzugte Kautschuke sind Polyurethane, wie in den EP-A 115 846, EP-A 115 847, EP-A 116 456, EP-A 117 664 und der EP-A 327 384 beschrieben. Kommerziell im Handel sind solche Produkte z.B. unter den Bezeichnungen Desmopan® (Bayer AG) oder Elastollan® (Elastogran Polyurethane GmbH) erhältlich.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente C) enthalten die thermoplastischen Formmassen 10 bis 80 Gew.-%, bevorzugt 20 bis 70 Gew.-%, insbesondere 25 bis 60 Gew.-% eines Polyester-Präpolymeren mit einer Viskositätszahl von 40 bis 100 ml/g, bevorzugt 60 bis 100 und insbesondere 80 bis 100 ml/g, gemessen in einer 0,5 %igen Lösung in einer 1:1 o-Dichlorbenzol/Phenol-Lösungsmittelmischung bei 25°C.

Derartige Polyester sind an sich bekannt. Vorzugsweise werden Polyester verwendet, die einen aromatischen Ring in der Hauptkette enthalten. Der aromatische Ring kann auch substituiert sein, z.B. durch Halogene, wie Chlor und Brom und/oder durch C₁- bis C₄-Alkylgruppen, wie z.B. Methyl-, Ethyl-, i- bzw. n-Propyl- und i- bzw. n- bzw. t-Butylgruppen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 10 C-Atomen, besonders bevorzugt Ethylenglykol, 1,3-Propandiol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure oder Naphthalindicarbonsäuren und einer C₂- bis C₆-Diolkomponente, z.B. Polyethylenterephthalat, Polyethylennaphthalat, Polypropylenterephthalat oder Polybutylenterephthalat oder deren Mischungen werden besonders bevorzugt.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (Du Pont).

Die Herstellung der Polyesterpräpolymeren kann durch Reaktion von Dicarbonsäuren, deren Ester oder anderer esterbildender Derivate mit Dihydroxyverbindungen in an sich bekannter Weise sowohl diskontinuierlich als auch kontinuierlich (siehe z.B. EP 346 735, kontinuierliche Herstellung) erfolgen.

Das in üblicher Weise erhältliche Polyester-Präpolymere wird kontinuierlich aus der Kondensationszone entnommen.

Nach einer bevorzugten Arbeitsweise leitet man das Polyester-Präpolymere schmelzflüssig durch eine Austragszone. Die Schmelze wird in Stränge gegossen und granuliert. Das erhaltene Granulat (Komponente C) wird bei etwa 20°C über dem Schmelzpunkt der Komponente C) (im Falle von Polybutylenterephthalat bei etwa 240°C), bevorzugt in einem Doppelschneckenextruder aufgeschmolzen und mit dem Flammschutzmittel (Komponente A) und gegebenenfalls der Komponente B) gemischt, als Strang ausgetragen, gekühlt und granuliert.

Nach einer besonders bevorzugten Ausführungsform leitet man das Polyester-Präpolymere durch einen Austragsextruder, wobei die Komponente A) und ggf. B) eingemischt werden. Der Austragsextruder ist in diesem Fall mit geeigneten Mischelementen, wie Knetern, ausgestattet. Anschließend wird ebenfalls als Strang extrudiert, gekühlt und granuliert.

Dieses Granulat wird in fester Phase unter Inertgas kontinuierlich oder diskontinuierlich bei einer Temperatur unterhalb des Schmelzpunktes, z.B. von 170 bis 220°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas bevorzugt Stickstoff verwendet wird.

Die Viskositätszahl, gemessen an einer 0,5 gew.-%igen Lösung von o-Dichlorbenzol/Phenol im Verhältnis 1:1 bei 25°C, liegt nach der Nachkondensation in fester Phase im allgemeinen im Bereich von 120 bis 500 ml/g, vorzugsweise von 130 bis 200 ml/g.

Die Formmassen zeichnen sich durch gute Flammschutzeigenschaften und mechanische Eigenschaften auf. Insbesondere wird bei der Einarbeitung der hohen Füllstoffmengen das Aufschäumen des Granulatstranges erheblich reduziert, so daß ein kompaktes Granulat mit einer hohen Schüttdichte entsteht.

### Beispiele

### Beispiel 1

Ein Polybutylenterephthalat-Präpolymeres mit einer Viskositätszahl von 100 ml/g (gemessen an einer 0,5 gew-%igen Lösung in Phenol/o-Dichlorbenzol (Gewichtsverhältnis 1:1)) (Ultradur® B 2550 der BASF AG) (Komponente C)) wurde mit einer Mischung aus Mg₃Ca(CO₃)₄ (Huntit) und Mg₅(CO₃)₄(OH)₂ · 4 H₂O (Hydromagnesit) (Gew.-Verhältnis Huntit:Hydromagnesit = 2:1) (Komponente A)) und epoxysilanisierten Schnittglasfasern mit einem mittleren Faserdurchmesser von 10 µm (Komponente B) auf einem Zweiwellenextruder (ZSK 53 der Firma Werner & Pfleiderer) bei 250°C gemischt (30 kg/h Durchsatz, 140 U/min), extrudiert, gekühlt und granuliert.

Das Produkt wurde unter Stickstoff bei 215°C in einem Taumlermischer auf die in der Tabelle angegebene VZ nachkondensiert.

### Vergleichsbeispiel 1

Auf einem Zweischneckenextruder (ZSK 53 von Werner & Pfleiderer) wurden bei 250°C Polybutylenterephthalat mit einer Viskositätszahl von 135 ml/g (Ultradur® B 4500 der BASF AG; Komponente C/1V) und die in Beispiel 1 beschriebenen Komponenten A und B in üblicher Weise gemischt und konfektioniert.

Auf einer Spritzgußmaschine wurden bei 260°C Normprüfkörper hergestellt.

Die Zusammensetzungen und die Eigenschaften sind in der Tabelle zusammengestellt.

Die Viskositätszahl VZ wurde an einer 0,5 gew.-%igen Lösung in Phenol/o-Dichlorbenzol (Gew.-Verhältis 1:1) bestimmt. Der Elastizitätsmodul (E-Modul) wurde nach DIN 53 457 bestimmt und die Schlagzähigkeit aₙ nach DIN 53 453.

Die Flammschutzprüfung erfolgte im vertikalen Brandtest (UL 94) nach den Vorschriften der Underwriter Laboratories. Als Testkörper wurden Brandstäbe mit 1/32" Dicke verwendet.

Die Bestimmung des Schüttgewichtes erfolgte nach mechanischem Rütteln des Granulates durch Wiegen von 1 l Granulat.

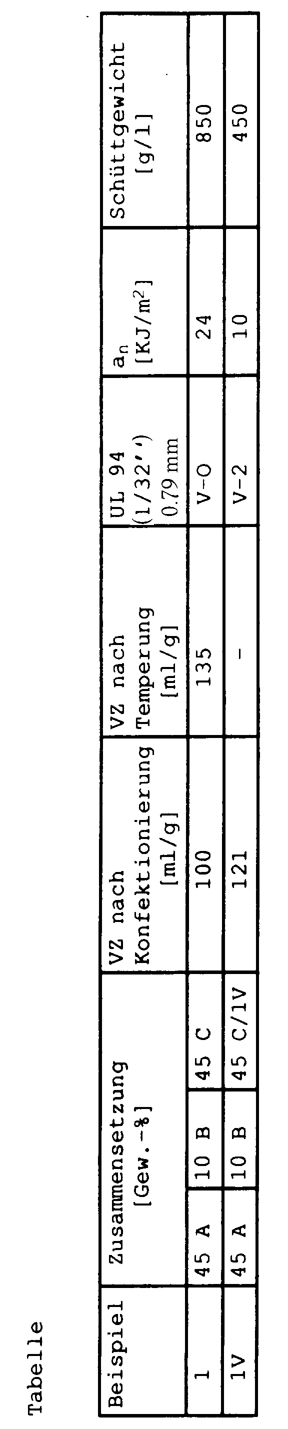

## Patentansprüche

1. Verfahren zur Herstellung von flammgeschützten thermoplastischen Formmassen, durch Einmischen von
A) 20 bis 70 Gew.-% Mischungen aus Carbonaten von Metallen der 2. Hauptgruppe des Periodensystems
und
B) 0 bis 70 Gew.-% weiterer Zusatzstoffe und Verarbeitungshilfsmittel
in eine Schmelze von
C) 10 bis 80 Gew.-% eines Polyester-Präpolymeren mit einer Viskositätszahl von 40 bis 100 ml/g, gemessen in einer 0,5 %igen Lösung in einer 1:1 o-Dichlorbenzol/Phenol-Lösungsmittelmischung bei 25°C,
und anschließende Nachkondensation in fester Phase.

2. Verfahren nach Anspruch 1, dadurch gekennzeichnet, daß die Nachkondensation in fester Phase bis zu einer Viskositätszahl des Polyesters von mindestens 120 ml/g geführt wird.

3. Verfahren nach den Ansprüchen 1 bis 2, dadurch gekennzeichnet, daß als Komponente A eine Mischung aus
a₁) einem Magnesium-Calcium-Carbonat der allgemeinen Formel MgₓCa_{y}(CO₃)_{x-y} · m H₂O,
wobei x und y Zahlen von 1 bis 5 bedeuten
und x/y ≥ 1 gilt
und m ≥ 0
und
a₂) einem basischen Magnesium-Carbonat der allgemeinen Formel Mgₙ(CO₃)ᵥ(OH)₂ₙ₋₂ᵥ · w H₂O
wobei n eine Zahl von 1 bis 6 bedeutet,
v eine Zahl größer als 0 und kleiner als 6
und n/v > 1 gilt
und w ≥ 0
eingesetzt wird, wobei das Mengenverhältnis von a₁):a₂) im Bereich von 1:1 bis 3:1 liegt.

## Claims

1. A process for the preparation of a flameproofed thermoplastic molding material by mixing
A) from 20 to 70% by weight of a mixture of carbonates of metals of the 2nd main group of the Periodic Table of Elements
and
B) from 0 to 70% by weight of conventional additives and processing assistants
in a melt of
C) from 10 to 80% by weight of a polyester prepolymer having a viscosity number of from 40 to 100 ml/g, measured in a 0.5% strength solution in a 1:1 o-dichlorobenzene/phenol solvent mixture at 25°C,
and subsequently carrying out solid-phase postcondensation.

2. A process as claimed in claim 1, wherein the solid-phase postcondensation is carried on until the polyester has a viscosity number of at least 120 ml/g.

3. A process as claimed in claim 1 or 2, wherein a mixture of
a₁) a magnesium calcium carbonate of the formula MgₓCa_{y}(CO₃)_{x+y} · m H₂O,
where x and y are each from 1 to 5,
x/y ≥ 1 and
m ≥ 0
and
a₂) a basic magnesium carbonate of the formula Mgₙ(CO₃)ᵥ(OH)₂ₙ₋₂ᵥ · w H₂O
where n is from 1 to 6,
v is greater than 0 and less than 6,
n/v > 1 and
w ≥ 0,
is used as component A, the ratio of a₁) to a₂) being from 1:1 to 3:1.

## Revendications

1. Procédé de préparation de masses à mouler thermoplastiques ignifugées, par incorporation de
A) 20 à 70% en poids de mélanges de carbonates de métaux du groupe IIA de la classification périodique
et de
B) 0 à 70% en poids d'autres additifs et agents auxiliaires de mise en oeuvre
dans une masse fondue de
C) 10 à 80% en poids d'un prépolymère de polyester ayant un indice de viscosité de 40 à 100 ml/g, mesuré sur une solution à 0,5% dans un mélange 1:1 de solvants o-dichlorabenzène/ phénol à 25°C,
suivie de post-condensation en phase solide.

2. Procédé selon la revendication 1, caractérisé en ce que la post-condensation en phase solide est menée jusqu'à un indice de viscosité du polyester d'au moins 120 ml/g.

3. Procédé selon la revendication 1 ou 2, caractérisé en ce que l'on utilise, comme composant A, un mélange
a₁) d'un carbonate de magnésium et de calcium de formule générale MgₓCa_{y}(CO₃)_{x-y} . m H₂O,
x et y étant mis pour des nombres de 1 à 5, avec
x/y ≥ 1
et m ≥ 0,
et
a₂) d'un carbonate de magnésium basique de formule générale Mgₙ(CO₃)ᵥ(OH)₂ₙ₋₂ᵥ . w H₂O,
n étant mis pour un nombre de 1 à 6,
v étant un nombre supérieur à 0 et inférieur à 6, avec n/v > 1
et w ≥ 0,
le rapport quantitatif a₁):a₂) se situant dans la gamme de 1:1 à 3:1.
